# EUROPÄISCHE PATENTANMELDUNG

(11) **EP 0 683 326 A1**
(43) Veröffentlichungstag der Anmeldung: **22.11.1995**
(21) Anmeldenummer: 95107127.3
(22) Anmeldetag: 11.05.1995
(51) Int. Cl.: F16B 19/14

(54) **Verfahren zum Setzen von Bolzen in steinartigem Aufnahmematerial**

(30) Priorität: 19.05.1994 DE 4417552
(71) Anmelder: Beto-Tornado GmbH, D-44379 Dortmund (DE)
(72) Erfinder: Reul, Martin, D-74632 Neuenstein (DE)
(74) Vertreter: Sparing - Röhl - Henseler Patentanwälte

(57) **Zusammenfassung**

Die Erfindung betrifft ein Verfahren zum Setzen von Bolzen (1) in steinartigem Aufnahmematerial (2), wobei in dem Aufnahmematerial (2) eine Sacklochbohrung (3) hergestellt und anschließend der an seinem in Eintreibrichtung vorderen Ende in einer Spitze (6) auslaufende und im vorderen Bereich einen reduzierten Durchmesser aufweisende Bolzen (1) mittels eines pulverkraftbetriebenen Setzgerätes durch die Sacklochbohrung (3) hindurch in das Aufnahmematerial (2) eingetrieben wird. Um die Gefahr eines Ausziehens der Bolzen bei späterer Belastung auszuschließen, wird der Bolzen (1) vor dem Eintreiben zusammen mit einer darauf aufgesetzten, in Axialrichtung geschlitzen Hülse (4) in die Sacklochbohrung (3) eingeführt, wobei der Bolzen (1) mit einem im wesentlichen konischen Abschnitt (8) am in Eintreibrichtung hinteren Ende seiner Spitze (6) die Hülse (4) bei seinem Eintreiben in der Sachlochbohrung (3) derart aufspreizt, daß die Hülse (4) mit ihrem in Eintreibrichtung hinteren Ende in das Aufnahmematerial (2) hineingedrückt wird.

## Beschreibung

Die Erfindung betrifft ein Verfahren zum Setzen von Bolzen in steinartigem Aufnahmematerial, wobei in dem Aufnahmematerial eine Sacklochbohrung hergestellt und anschließend der an seinem in Eintreibrichtung vorderen Ende in einer Spitze auslaufende und im vorderen Bereich einen reduzierten Durchmesser aufweisende Bolzen mittels eines pulverkraftbetriebenen Setzgerätes durch die Sacklochbohrung hindurch in das Aufnahmematerial eingetrieben wird.

Aus der DE-A-2 849 139 ist ein derartiges Verfahren bekannt, bei dem Befestigungselemente in Form von Nägeln oder Bolzen nach Herstellung einer Sacklochbohrung mittels eines pulverkraftbetriebenen Setzgerätes durch die Sacklochbohrung hindurch in das Aufnahmematerial eingetrieben werden. Es hat sich jedoch gezeigt, daß die Gefahr besteht, daß so gesetzte Befestigungselemente bei Belastung aus dem Aufnahmematerial wieder herausgezogen werden.

Ferner ist es aus der US-A-3 480 306 bekannt, Bolzen in Metallteilen wie Trägern od.dgl. zu setzen, wobei eine Sacklochbohrung in dem Metallteil angebracht wird, in die der Bolzen vor dem Eintreiben zusammen zusammen mit einer darauf aufgesetzten Hülse eingesetzt wird, um dann den Bolzen mittels eines pulverkraftbetriebenen Setzgerätes weiter einzutreiben. Die Hülse ist hierbei umlaufend geschlossen und etwas konisch ausgebildet, legt sich beim Eintreiben des Bolzens bündig an die Innenwand der Sacklochbohrung an und wird durch das bündige Anpressen an diese Innenwand reibschlüssig verankert. Der Bolzen spreizt beim Eintreiben die aufgesetzte Hülse mit einem im wesentlichen konischen Abschnitt am in Eintreibrichtung hinteren Ende seiner Spitze die Hülse unter deren Verformung in der Sachlochbohrung auf, während die Spitze des Bolzens bis zum Boden der Sacklochbohrung eingetrieben wird. Für ein Verankern von Bolzen in steinartigem Aufnahmematerial wie Beton, Mauerwerk, Gestein od.dgl. ist dies jedoch nicht geeignet, da häufig die Innenwand der Sacklochbohrung unregelmäßig ist, ausgebrochene Bereiche aufweisen kann und im allgemeinen nur vergleichsmäßig geringere Drücke aushält.

Aufgabe der Erfindung ist es, ein Verfahren der eingangs genannten Art zu schaffen, mit dem Bolzen so sicher gesetzt werden können, daß die Gefahr eines Ausziehens der Bolzen bei späterer Belastung praktisch ausgeschlossen ist.

Diese Aufgabe wird entsprechend dadurch gelöst, daß der Bolzen vor dem Eintreiben zusammen mit einer darauf aufgesetzten, in Axialrichtung geschlitzen Hülse in die Sacklochbohrung eingeführt wird, wobei der Bolzen mit einem im wesentlichen konischen Abschnitt am in Eintreibrichtung hinteren Ende seiner Spitze die Hülse bei seinem Eintreiben in der Sachlochbohrung derart aufspreizt, daß die Hülse mit ihrem in Eintreibrichtung hinteren Ende in das Aufnahmematerial hineingedrückt wird.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

Fig. 1 bis 4 zeigen ausschnittweise verschiedene Ausführungsformen von Befestigungselementanordnungen vor dem Eintreiben.

Fig. 5 und 6 zeigen in unterschiedlichen Maßstäben im Schnitt eine Hülse und in Seitenansicht ausschnittweise einen Bolzen einer weiteren Ausführungsform einer Befestigungselementanordnung.

Fig. 7 zeigt zeigt die Befestigungselementanordnung von Fig. 5, 6 nach dem Eintreiben.

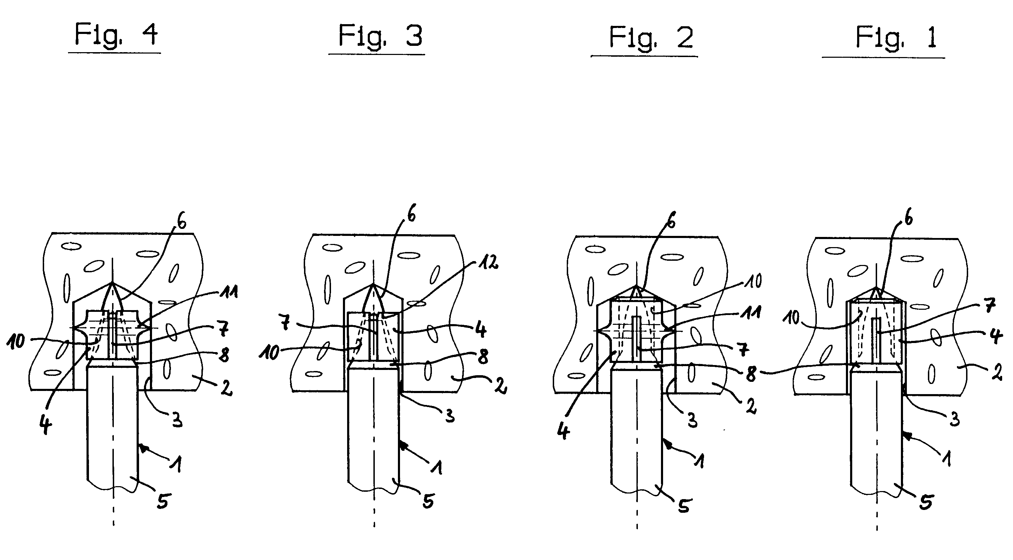

Gemäß Fig. 1 wird zum Setzen eines Bolzens 1 zunächst im steinartigen Aufnahmematerial 2 wie Beton, Mauerwerk, Gestein od.dgl. eine Sacklochbohrung 3 angebracht und anschließend der vordere Teil des Bolzens 1 mit einer aufgesetzten Hülse 4 in die Sacklochbohrung 3 bis zur Anlage am Grund der Sacklochbohrung 3 eingeführt, wonach der Bolzen 1, der mit seinem hinteren Schaftabschnitt 5 vom Lauf eines pulverkraftbetriebenen Setzgerätes (nicht dargestellt) aufgenommen ist, mittels des Setzgerätes eingetrieben wird. Der Bolzen 1 ist rückseitig, d.h. an seinem nach dem Setzen aus der Sacklochbohrung 3 herausragende Ende, beispielsweise mit einem Gewinde als Lastbefestigungsmittel versehen.

Der Bolzen 1 von Fig. 1 besitzt eine Spitze 6, die gegenüber dem hinteren Schaftabschnitt 5 einen verminderten Durchmesser aufweist und im wesentlichen doppeltkonisch ausgebildet ist. Die Hülse 4 gemäß Fig. 1 ist innen und außen im wesentlichen zylindrisch und mit mehreren, sich in Axialrichtung von der Rückseite bis nahezu zur Vorderseite erstreckenden Längsschlitzen 7 (stattdessen kann man auch einen durchgehenden Längsschlitz 7 verwenden, vgl. Fig. 3, 4) versehen. Die Hülse 4 besitzt einen Außendurchmesser, der praktisch gleich dem Durchmesser des hinteren Schaftabschnitts 5 des Bolzens 1 ist. Die Sacklochbohrung 3 besitzt einen Durchmesser, der wenig größer als der Außendurchmesser der Hülse 4 und des Schaftabschnitts 5 ist.

Die Hülse 4 sitzt vorzugsweise mit Klemmsitz auf dem hinteren konischen Abschnitt 8 der doppeltkonischen Spitze 6 des Bolzens 1, während der vorderen konische Abschnitt der Spitze 6 von der Bohrung 10 der Hülse 4 aufgenommen wird und vorne etwa herausragt.

Beim Eintreiben des Bolzens 1 in das Aufnahmematerial 2 benachbart zum Grund der Sacklochbohrung 3 spreizt dessen konischer Abschnitt 8 die Hülse 4, die hierdurch in das Aufnahmematerial 2 eingepreßt wird. Die Längsschlitze 7 begünstigen das Aufspreizen. Auf diese Weise wird der von der im Aufnahmematerial 2 verankerten Hülse 4 mit Preßsitz aufgenommene Bolzen 1 zusätzlich verankert und ist daher gegen späteres Ausziehen gesichert.

Bei der in Fig. 2 dargestellten Ausführungsform der Befestigungselementanordnung ist deren Hülse 4 zusätzlich außenumfänglich mit einem (oder mehreren) Ring(en) 11 mit einem Querschnitt etwa in Form eines spitzen Dreiecks versehen. Stattdessen kann auch ein Gewindeabschnitt verwendet werden. Der Durchmesser der Sacklochbohrung 3 ist in diesem Fall so groß zu wählen, daß die Hülse 4 mit dem Ring 11 ohne weiteres eingeführt werden kann. Der Ring 11 führt zu einer weiter verbesserten Verankerung der Hülse 4 im Aufnahmematerial 2.

Bei der in Fig. 3 dargestellten Ausführungsform der Befestigungselementanordnung ist deren Hülse 4 innen konisch nach vorne, d.h. zum Grund der Sachlochbohrung 3 hin sich verengend ausgebildet. Dies erlaubt die Verwendung einer kürzeren Hülse 4.

Hierbei kann, wie in Fig. 3 dargestellt, der Bolzen 1 mit einem umlaufenden zylindrischen Abschnitt 12 versehen sein, der sich vor dem Setzen benachbart zur Vorderseite der Hülse 4 im Innenbereich von dieser befindet, so daß die Hülse 4 nur im Bereich der Hinter- und Vorderseite mit der Spitze 6 des Bolzens 1 in Eingriff steht.

Fig. 4 zeigt eine Ausführungsform, die die Merkmale derjenigen der Fig. 2 und 3 vereinigt.

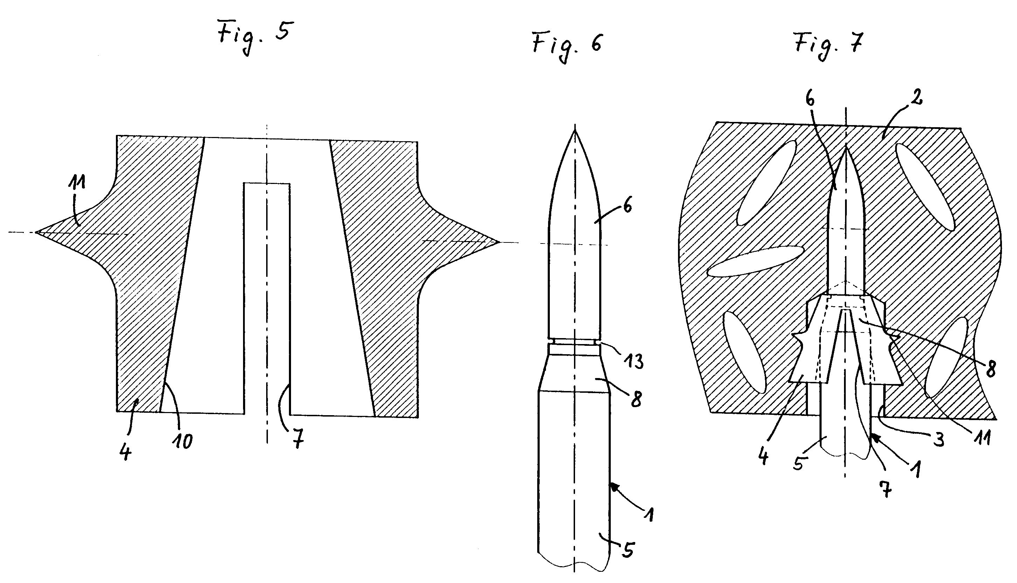

Gemäß der in Fig. 5 und 6 dargestellten Ausführungsform der Befestigungselementanordnung ist deren Hülse 4 innen konisch nach vorne, d.h. zum Grund der Sachlochbohrung 3 hin sich verengend sowie mit zwei gegenüberliegenden, nicht durchgehenden Längsschlitzen 7 versehen ausgebildet und weist einen Ring 11 auf. Der Bolzen 1 besitzt hierbei eine geschoßartig ausgebildete Spitze 6, die benachbart zum konischen Abschnitt 8 eine umlaufende nutartige Ausnehmung 13 aufweist.

Wie aus Fig. 7 ersichtlich ist, spreizt der konische Abschnitt 8 beim Eintreiben die Hülse 4 auf, so daß deren Ring 11 und deren hinterer Endabschnitt in das Aufnahmematerial 2 eindringt und die Hülse 4 dort verankert. Das Eintreiben geschieht soweit, daß sich die Ausnehmung 13 im vorderen Bereich der Hülse 4 befindet, so daß das Hülsenmaterial infolge des Eintreibens in die Ausnehmung 13 hineingedrückt wird, so daß zwischen der Hülse 4 und dem Bolzen 1 nicht nur ein pressender, sondern auch ein körperlicher Eingriff erzeugt wird.

## Patentansprüche

1. Verfahren zum Setzen von Bolzen (1) in steinartigem Aufnahmematerial (2), wobei in dem Aufnahmematerial (2) eine Sacklochbohrung (3) hergestellt und anschließend der an seinem in Eintreibrichtung vorderen Ende in einer Spitze (6) auslaufende und im vorderen Bereich einen reduzierten Durchmesser aufweisende Bolzen (1) mittels eines pulverkraftbetriebenen Setzgerätes durch die Sacklochbohrung (3) hindurch in das Aufnahmematerial (2) eingetrieben wird, dadurch **gekennzeichnet**, daß der Bolzen (1) vor dem Eintreiben zusammen mit einer darauf aufgesetzten, in Axialrichtung geschlitzen Hülse (4) in die Sacklochbohrung (3) eingeführt wird, wobei der Bolzen (1) mit einem im wesentlichen konischen Abschnitt (8) am in Eintreibrichtung hinteren Ende seiner Spitze (6) die Hülse (4) bei seinem Eintreiben in der Sachlochbohrung (3) derart aufspreizt, daß die Hülse (4) mit ihrem in Eintreibrichtung hinteren Ende in das Aufnahmematerial (2) hineingedrückt wird.

2. Verfahren nach Anspruch 1, dadurch gekennzeichnet, daß eine mit Klemmsitz auf dem Bolzen (1) sitzende Hülse (4) verwendet wird.

3. Verfahren nach Anspruch 1, dadurch gekennzeichnet, daß eine Hülse (4) verwendet wird, die einen durchgehenden Längsschlitz (7) aufweist.

4. Verfahren nach einem der Ansprüche 1 bis 3, dadurch gekennzeichnet, daß eine Hülse (4) verwendet wird, die einen oder mehrere, sich vom hinteren Ende nach vorne erstreckende Längsschlitze (7) aufweist.

5. Verfahren nach einem der Ansprüche 1 bis 4, dadurch gekennzeichnet, daß eine Hülse (4) verwendet wird, die innen kegelig ist.

6. Verfahren nach einem der Ansprüche 1 bis 5, dadurch gekennzeichnet, daß eine Hülse (4) verwendet wird, die außenumfänglich einen oder mehrere Ringe (11) mit einem Querschnitt etwa in Form eines spitzen Dreiecks oder einen Gewindeabschnitt aufweist.

7. Verfahren nach einem der Ansprüche 1 bis 6, dadurch gekennzeichnet, daß ein Bolzen (1) mit einer etwa doppeltkonischen Spitze (6) verwendet wird.

8. Verfahren nach einem der Ansprüche 1 bis 7, dadurch gekennzeichnet, daß ein Bolzen (1) mit einer einen geschoßartigen Abschnitt aufweisenden Spitze (6) verwendet wird.

9. Verfahren nach einem der Ansprüche 1 bis 8, dadurch gekennzeichnet, daß ein Bolzen (1) im Bereich der Hülse (4) mit einer umlaufenden Ausnehmung (13) versehen verwendet wird.
